(19) Europäisches Patentamt / European Patent Office / Office européen des brevets

(11) **EP 3 759 864 B1**

(12) **EUROPEAN PATENT SPECIFICATION**

(45) Date of publication and mention
of the grant of the patent:
**10.07.2024 Bulletin 2024/28**

(21) Application number: **19710154.6**

(22) Date of filing: **19.02.2019**

(51) International Patent Classification (IPC):
**H04L 9/00** *(2022.01)* **H04L 9/08** *(2006.01)*
**H04L 9/32** *(2006.01)*

(52) Cooperative Patent Classification (CPC):
**H04L 9/085; H04L 9/008; H04L 9/3236;**
**H04L 9/3255; H04L 9/50;** H04L 2209/46;
H04L 2209/463; H04L 2209/56

(86) International application number:
**PCT/IB2019/051327**

(87) International publication number:
**WO 2019/166916 (06.09.2019 Gazette 2019/36)**

(54) **COMPUTER IMPLEMENTED VOTING PROCESS AND SYSTEM**

COMPUTERIMPLEMENTIERTES WAHLVERFAHREN UND SYSTEM

PROCÉDÉ ET SYSTÈME DE VOTE INFORMATISÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **02.03.2018 GB 201803396**
**02.03.2018 PCT/IB2018/051338**
**29.10.2018 GB 201817506**

(43) Date of publication of application:
**06.01.2021 Bulletin 2021/01**

(60) Divisional application:
**24178258.0 / 4 398 514**

(73) Proprietor: **nChain Licensing AG**
**6300 Zug (CH)**

(72) Inventor: **WRIGHT, Craig Steven**
**Cardiff CF10 2HH (GB)**

(74) Representative: **Murgitroyd & Company**
**165-169 Scotland Street**
**Glasgow G5 8PL (GB)**

(56) References cited:
- **ZHAO ZHICHAO ET AL: "How to Vote Privately Using Bitcoin", 5 March 2016, IMAGE ANALYSIS AND RECOGNITION : 11TH INTERNATIONAL CONFERENCE, ICIAR 2014, VILAMOURA, PORTUGAL, OCTOBER 22-24, 2014, PROCEEDINGS, PART I; IN: LECTURE NOTES IN COMPUTER SCIENCE , ISSN 1611-3349 ; VOL. 8814; [LECTURE NOTES IN COMPUTER SCIENCE; LECT.NO, ISBN: 978-3-642-17318-9, XP047336976**
- **IBRAHIM M H ET AL: "A robust threshold elliptic curve digital signature providing a new verifiable secret sharing scheme", MIDWEST SYMPOSIUM ON CIRCUITS AND SYSTEMS. CAIRO, EGYPT, DEC. 27 - 30, 2003; [MIDWEST SYMPOSIUM ON CIRCUITS AND SYSTEMS], PISCATAWAY, NJ, IEEE, US, vol. 1, 27 December 2003 (2003-12-27), pages 276 - 280, XP010867444, ISBN: 978-0-7803-8294-7, DOI: 10.1109/MWSCAS.2003.1562272**
- **CHIEN-HUA TSAI ET AL: "Multi-document threshold signcryption scheme : Multi-document threshold signcryption scheme", SECURITY AND COMMUNICATION NETWORKS, vol. 8, no. 13, 10 September 2015 (2015-09-10), pages 2244 - 2256, XP055588166, ISSN: 1939-0114, DOI: 10.1002/sec.1169**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

• **P.V. LAKSHMI ET AL: "A secure approach to election scheme based on Naccache Stern Knapsack Cryptosystem", INTERNATIONAL JOURNAL OF COMPUTER APPLICATIONS, vol. 4, no. 7, 7 July 2010 (2010-07-07), pages 16 - 19, XP055587981, DOI: 10.5120/840-1125**

**Description**

This invention relates generally to an automated voting process, and more particularly to a threshold signature scheme. The invention is particularly suited, but not limited to, use in a threshold signature scheme for blockchain transactions.

In this document we use the term 'blockchain' to include all forms of electronic, computer-based, distributed ledgers. These include consensus-based blockchain and transaction-chain technologies, permissioned and un-permissioned ledgers, shared ledgers and variations thereof. The most widely known application of blockchain technology is the Bitcoin ledger, although other blockchain implementations have been proposed and developed. While Bitcoin may be referred to herein for the purpose of convenience and illustration, it should be noted that the invention is not limited to use with the Bitcoin blockchain and alternative blockchain implementations and protocols fall within the scope of the present invention. The term "user" may refer herein to a human or a processor-based resource.

A blockchain is a peer-to-peer, electronic ledger which is implemented as a computer-based decentralised, distributed system made up of blocks which in turn are made up of transactions. Each transaction is a data structure that encodes the transfer of control of a digital asset between participants in the blockchain system, and includes at least one input and at least one output. Each block contains a hash of the previous block so that blocks become chained together to create a permanent, unalterable record of all transactions which have been written to the blockchain since its inception. Transactions contain small programs known as scripts embedded into their inputs and outputs, which specify how and by whom the outputs of the transactions can be accessed. On the Bitcoin platform, these scripts are written using a stack-based scripting language.

In order for a transaction to be written to the blockchain, it must be "validated". Network nodes (miners) perform work to ensure that each transaction is valid, with invalid transactions rejected from the network. Software clients installed on the nodes perform this validation work on an unspent transaction (UTXO) by executing its locking and unlocking scripts. If execution of the locking and unlocking scripts evaluate to TRUE, the transaction is valid and the transaction is written to the blockchain. Thus, in order for a transaction to be written to the blockchain, it must be i) validated by the first node that receives the transaction - if the transaction is validated, the node relays it to the other nodes in the network; and ii) added to a new block built by a miner; and iii) mined, i.e. added to the public ledger of past transactions.

Although blockchain technology is most widely known for the use of cryptocurrency implementation, digital entrepreneurs have begun exploring the use of both the cryptographic security system Bitcoin is based on and the data that can be stored on the Blockchain to implement new systems. It would be highly advantageous if the blockchain could be used for automated tasks and processes which are not limited to the realm of cryptocurrency. Such solutions would be able to harness the benefits of the blockchain (e.g. a permanent, tamper proof records of events, distributed processing etc) while being more versatile in their applications.

Automated voting process can be used to execute blockchain transactions, for example by means of a majority decision based on votes cast by a plurality of participants, or by means of thresholds signature schemes requiring multiple signatures. Existing automated voting processes have drawbacks when a number of parties have a varying number of votes, a sub-set of which needs to provide support or consent in order to enable a motion to be passed, or a transaction such as a blockchain transaction to be signed.

Thus, it is desirable to provide an arrangement which enables this to be achieved as the computational demands of finding optimal combinations of parties increases.

Such an improved solution has now been devised.

ZHAO ZHIGHAO ET AL: "How to Vote Privately Using Bitcoin", 5 March 2016 (2016-03-05), IMAGE ANALYSIS AND RECOGNITION : 11TH INTERNATIONAL CONFERENCE, ICIAR 2014, VILAMOURA, PORTUGAL, OCTOBER 22-24, 2014, PROCEEDINGS, PART I; IN: LECTURE NOTES IN COMPUTER SCIENCE , ISSN 1611-3349 ; VOL 8814 describes voting privately using Bitcoin determined by majority voting.

IBRAHIM M H ET AL: "A robust threshold elliptic curve digital signature providing a new verifiable secret sharing scheme", MIDWEST SYMPOSIUM ON CIRCUITS AND SYSTEMS. CAIRO, EGYPT, DEC. 27 - 30, 2003; PISCATAWAY, NJ, IEEE, US, vol. 1, 27 December 2003, pages 276-280, describes a verifiable secret sharing scheme employing threshold elliptic curve digital signature scheme.

Chien-Hua Tsai ET AL: "Multi-document threshold signcryption scheme", Security and Communication Networks, vol. 8, no. 13, 10 September 2015 (2015-09-10), pages 2244-2256, describes threshold signcryption, providing characteristics of digital signature and encryption, based on elliptic curve cryptography.

P.V. Lakshmi ET AL: "A secure approach to election scheme based on Naccache Stem Knapsack Cryptosystem", International Journal of Computer Applications, vol. 4, no. 7, 7 July 2010 (2010-07-07), pages 16-19, describes an electronic voting scheme for voting in a democratic governmental election.

Thus, in accordance with the present invention there is provided a process as defined in the appended claims.

In accordance with the invention there may be provided a computer implemented voting process as defined in claim 1.

By determining, based on different numbers of shares of the first common secret held by a plurality of the participants, at least one combination of shares to provide the first threshold number of shares, this provides the advantage of enabling the first threshold number of shares to be determined dynamically as the number of shares held by various participants changes, thereby improving efficiency of the voting process.

In the context of the present invention, the term "voting" includes not only voting in the sense of a collective decision being made by a majority of participants, but also includes a polling process enabling an automatic decision to be made, for example to control a computer or other machine, or to enable signature of a blockchain transaction to enable the blockchain transaction to be executed, on the basis of a majority of shares of votes of those polled.

The step of determining at least one said combination may comprise applying a knapsack algorithm to data including information representing respective numbers of shares held by a plurality of said participants.

This provides the advantage of improving the computational efficiency of the process.

The data may further include information representing estimated voting behaviour of a plurality of said participants.

This provides the advantage of enabling expected voting behaviour of participants to be taken into account, thereby improving the efficiency of the voting process.

The information representing estimated voting behaviour may include a coefficient by which the information representing respective numbers of shares held by a plurality of said participants is multiplied.

The knapsack algorithm may determine at least one first said combination for shares held by a first plurality of said participants on the basis of at least one second said combination for shares held by a second plurality of said participants, wherein said second plurality is different from said first plurality.

This provides the advantage of enabling the combination to be determined recursively, thereby improving computational efficiency of the process.

Numbers of shares held by a plurality of participants may be estimated by comparing said data to a plurality of predetermined values.

This provides the advantage of enabling more rapid determination of approximate numbers of shares.

The predetermined values may be based on at least one Stem series.

This provides the advantage of enabling the predetermined values to be generated in a computationally efficient manner by enabling recursive determination of the predetermined values. A plurality of said predetermined values may be determined on the basis of other said predetermined values.

This provides the advantage of improving computational efficiency by enabling recursive determination of the predetermined values.

The first common secret may be a digital signature.

Each said share may be a partial signature, signed by a respective share of a private key and a respective share of an ephemeral key, and the method may further comprise distributing a plurality of shares of said private key among said plurality of participants, wherein said first private key is accessible to a second threshold number of shares and is inaccessible to less than said second threshold number of shares, and distributing a plurality of shares of said ephemeral key among said plurality of participants, wherein said ephemeral key is accessible to a third threshold number of shares and is inaccessible to less than said third threshold number of shares.

The digital signature may be applied to a blockchain transaction.

The invention also provides a system, comprising:

a processor; and
memory including executable instructions that, as a result of execution by the processor, causes the system to perform any embodiment of the computer-implemented process described herein.

The invention also provides a non-transitory computer-readable storage medium having stored thereon executable instructions that, as a result of being executed by a processor of a computer system, cause the computer system to at least perform an embodiment of the computer-implemented process described herein.

These and other aspects of the present invention will be apparent from and elucidated with reference to, the embodiment described herein. An embodiment of the present invention will now be described, by way of example only, and with reference to the accompany drawings, in which:

Figure 1 shows a schematic representation of an automated voting process embodying the present invention; and

Figure 2 is a schematic diagram illustrates a computing environment in which various embodiments can be implemented.

A mechanism for generating shares of a signed blockchain transaction will first be described.

Initially, secure communication channels are established between participants in a manner described in detail in International Patent Application WO 2017/145016, so that data can be exchanged between participants without being made available to other participants.

When secure communication channels have been established between the participants, shares $d_{A(i)}$ of a first private key $d_A$ are distributed between a group of first participants by means of a method as described below.

Algorithm 1 - Key Generation

Domain Parameters (CURVE, Cardinality n , Generator *G*)

| | |
|---|---|
| **Input:** | N/A |
| **Output:** | Key Shares $d_{A1}$, $d_{A2}$ ... $d_{AN}$ |

The method for *algorithm 1* follows:

1) Each participant $p_{(i)}$ of (N) where $1 \le i \le N$ exchanges an ECC public key (or in this implementation, a Bitcoin address) with all other participants. This address is the Group identity address and does not need to be used for any other purpose.

It should be noted that this is a derived address, for example as disclosed in International patent application WO2017/145016, and key based on a shared value between each of the participants from the process disclosed therein.

2) Each participant $p_{(i)}$ selects a polynomial $f_i(x)$ of degree ($k$ -1) with random coefficients in a manner that is secret from all other parties.

This function is subject to the participant's secret $a_0^{(i)}$ that is selected as the polynomial free term. This value is not shared. This value is calculated using a derived private key.

$f_i(h)$ is defined to be the result of the function, $f_{(x)}$ that was selected by participant $p_{(i)}$ for the value at point (x

= h) , and the base equation for participant $p_{(i)}$ is defined as the function: $f_{(x)} = \Sigma_{p=0}^{(k-1)} \ a_p x^p \bmod n$

In this equation, $a_0$ is the secret for each participant $p_{(i)}$ and is not shared.

Hence, each participant $p_{(i)}$ has a secretly kept function $f_i(x)$ that is expressed as the degree (k-1) polynomial with a free term $a_0^{(i)}$ being defined as that participant's secret such that:

$$f_{i(x)} = \Sigma_{\gamma=0}^{(k-1)} \ a_\gamma x^\gamma \bmod n$$

3) Each participant $p_{(i)}$ encrypts $f_i(h)$ to participant $P_{(h)} \ \forall$ h= {1,..., (i -1), (i + 1),..., N} using $P_{(h)}$ 's public key as noted above and exchanges the value for $P_{(h)}$ to decrypt.

Given that $\mathbf{Z}_n$ is a field and it is possible to validly do Lagrange interpolation modulo $n$ over the values selected as ECC private keys, a condition exists which leads to the conclusion that Shamir's Secret Sharing Scheme SSSS [5] can be implemented over$\mathbf{Z}_n$.

4) Each participant $P_{(i)}$ broadcasts the values below to all participants.

a) $a_\kappa^{(i)}G \ \ \forall \kappa = \{0,\dots,(k-1)\}$

b)

$$f_i(h)G \qquad \forall h = \{1,\dots,N\}$$

The value associated with the variable h in the equation above can either be the position of the participant $P_{(h)}$ such that if participant $P_{(h)}$ represents the third participant in a scheme, then h=3 or equally may represent the value of the ECC public key used by the participant as an integer. Use cases and scenarios exist for either implementation. In the latter implementation, the value $h$ = {1,..., $N$} would be replaced by an array of values mapped to the individual participant's utilised public key.

5) Each participant $P_{(h \neq i)}$ verifies the consistency of the received shares with those received from each other participant. That is:

$$\sum_{\kappa=0}^{(k-1)} h^{\kappa} a_{\kappa}^{(i)} \ G = f_i(h)G$$

And that $f_i(h)G$ is consistent with the participant's share.

6) Each participant $P_{(h \neq i)}$ validates that the share owned by that participant $P_{(h \neq i)}$) and which was received is consistent with the other received shares:

$$a_0^{(i)}G = \Sigma_{h \in B} \ \beta_j f_i\left(h\right)G \qquad \forall P_{(h \neq i)}$$

In effect, this means that the participant carries out a process which would recover the shared secret from the received shares, but instead recovers the shared secret multiplied by the generator point G, from the shares multiplied by G. If this is not consistent, the participant rejects the protocol and starts again.

7) Participant $p_{(i)}$ now either calculates their share $d_{A(i)}$ as:

$$\mathrm{SHARE}(p_{(i)}) = d_{A(i)} = \Sigma_{h=1}^{j} f_h\left(i\right) \bmod n$$

Where: $\mathrm{SHARE}(p_{(i)}) \in Z_n$
and
Where: $Q_A = Exp\text{-}Interpolate(f_1, ..., f_N) \rhd [ = G \times d_A]$

Where the operation "$Exp\text{-}Interpolate(f_1,..., f_N)$" means carrying out an operation to recover the shared secret value G x $d_A$, from the shares $f_1 \times G$, ... $f_N \times G$, in the manner usually used to recover a shared secret $d_A$, from the shares $f_1$, ... frr, for example by means of interpolation using Lagrange coefficients in the case of a Shamir secret sharing scheme.

## **Return** $\left(d_{A(i)}, Q_A\right)$

Participant $p_{(i)}$ now uses the share in calculating signatures. This role can be conducted by any participant or by a party $p_{(c)}$ that acts as a coordinator in the process of collecting a signature. The participant $p_{(c)}$ can vary and does not need to be the same party on each attempt to collect enough shares to sign a transaction.

Hence private key shares $d_{A(i)} \in Z_n^*$ have been created without knowledge of the other participant's shares.

Algorithm 2 - Updating the private key

**Input:** Participant $P_i$'s share of private key $d_A$ denoted as $d_{A(i)}$.

**Output:** Participant $P_i$'s new private key share d $_{A(i)}$'.

*Algorithm 2* can be used to both update the private key as well as to add randomness into the protocol.

1) Each participant selects a random polynomial of degree $(k - 1)$ subject to zero as its free term. This is analogous to *Algorithm 1* but that the participants must validate that the selected secret of all other participants is zero.

It should be noted that: $\varnothing G = nG = 0$ where 0 is a point at infinity on the elliptic curve.

Using this equality, all active participants validate the function:

$$a_0^{(i)}G = \varnothing \quad \forall i = \left\{1, \cdots, N\right\}$$

EP 3 759 864 B1

Generate the zero share: $z_i \in Z_n^*$

2)

$$d_{A(i)}' = d_{A(i)} + z_i$$

3) **Return:** $d_{A(i)}'$

A collection of participants construct private key shares $d_{A_1}$, $d_{A_2}$ ,...., $d_{A_N}$ in accordance with algorithm 1. New key shares $Dk_1$, $Dk_2$, ..., $Dk_N$ are introduced to each participant in the collection. These shares may be constructed using algorithm 1 above in which a threshold share of participants may be able to construct a shared secret $Dk$ that is not previously known. Alternatively, $Dk$ may be known in advance (eg a deterministic key) and shares may be constructed in a manner similar to algorithm but such that a pre-known $Dk$ is chosen to be the free term in the polynomial. In either case, $Dk \otimes G$ is known to all but only a slice $Dk_1$, $Dk_2$, ..., $Dk_N$ is known by each of the participant in the collection.

As all participants know 1st public key

$$P_{1S} = d_A \otimes G$$

they can calculate

$$P_{2S} = P_{1S} + Dk \otimes G$$

without broadcasting their slice of the $d_A$ or $Dk$, because the first $V_{1S}$ and second $V_{2S}$ private keys are related by $V_{2S} = V_{1S} + Dk$. The individual shares $d_{A_1} ...,d_{A_N}$ and $Dk_1,...,Dk_N$ remain known only to each individual participant.

A new address $P_{2S}$ can be created and a transaction tx signed to this, that changes who controls the main funds. That is, a payment from $P_{1S}$ to $P_{2S}$ can be signed by members of address $P_{1S}$.

The $Dk$ collection can be set as either a group from $P_{1S}$ collection (either a threshold number or all members) or may be a new group. Each threshold slice of $Dk$ is able to be assigned separately, but it should be remembered that if $P_{1S}$ and $Dk$ are controlled separately then this creates a dual signing structure where both $P_{1S}$ and $Dk$ are required at the respective threshold rates to sign a transaction tx. It should also be noted that $P_{1S}$ and $Dk$ do not require the same members nor the same proportions.

Algorithm 3 - Signature generation

**Input:**

Message to be signed $\qquad$ $e = H(m)$.
Private key share
$\qquad$ $d_{A_1}$, ..., $d_{A_N}$ where $d_{A_i} \in Z_n^*$ .

Deterministic key share

$$Dk_1,...,Dk_N \quad where \quad Dk_i \in Z_n^* .$$

The private key shares $d_{A_1}$ ,$d_{A_2}$ ,...., $d_{A_N}$ are generated by means of algorithm 1. The deterministic key shares $Dk_1$, $Dk_2$, ..., $Dk_N$ are generated by means of algorithm 1 using a random constant as the free term in the polynomial or using a pre-known deterministic key Dk as the free term.

Output:

## Signature

$$(r,s) \quad where \quad r,s \in Z_n^* \quad .$$

The signatures are generated using a method which incorporates both the shares of the private key $d_A$ and shares of the deterministic key $Dk$ into the signature. This is described in detail as follows.

Firstly, each participant generates emphemeral key shares using algorithm 1

$$k_i \in Z_n^* \quad .$$

Next *mask shares* are generated using algorithm 1 above

$$\alpha_i \in Z_n^*$$

and *zero mask shares* are generated using algorithm 2 above

$$\beta_i \in Z_n \quad c_i \in Z_n \ .$$

Each participant knows $k_i$, $\alpha_i, \beta_i, c_i$ and they are not known to anyone else.

1)

$$e = H(m)$$

Distribute the message (transaction to be signed). Broadcast

$$v_i = k_i \alpha_i + \beta_i \quad mod \ n$$

and

$$\omega_i = G \otimes \alpha_i \ .$$

2) Calculate

$$\triangleright [= k\alpha \quad mod \ n]$$

where *a* is the private key corresponding to the mask shares $\alpha_i$, and the operation "Interpolate ($v_1$, .... $v_N$)" means obtain the shared secret $\mu$ from the shares $v_1$, .... $v_N$, for example by using Lagrange interpolation coefficients.

3) Calculate $\theta := Exp - Interpolate(\omega_1,...,\omega_N) \ mod \ n$

$$\triangleright [= G \otimes \alpha] .$$

4) Calculate $(R_x, R_y)$ where

$$R_{xy} := (R_x, R_y) = \theta \otimes \mu^{-1} .$$

$$\triangleright [= G \otimes k^{-1}] .$$

5) Define

$$r := r_x = R_x \ mod \ n .$$

If $r = 0$ start over.
6) Broadcast

$$S_i := k_i \left( e + \left[ d_{A_i} + Dk_i \right] r \right) + c_i \quad mod \ n .$$

Note that if $d_{Ai}$ and $Dk_i$ represent different collections of participants then two participants from each collection must communicate to broadcast each individual $S_i$.
7)

$$s := Interpolate(S_1, \ldots, S_M) \quad mod \ n$$

$$\triangleright [= k(e + [d_A + Dk]r) \quad mod \ n] .$$

If S = 0 start over.
8) Return (r, s) .
9) Construct a transaction that comes from $P_{2S} = (d_A + Dk) \otimes G$. This is a standard Bitcoin transaction with an (r, s) signature. At no point have $d_A$ or $Dk$ been reconstructed (unless $Dk$ has been split from an existing known value).

Mechanism for optimisation of voting - Embodiment of solution

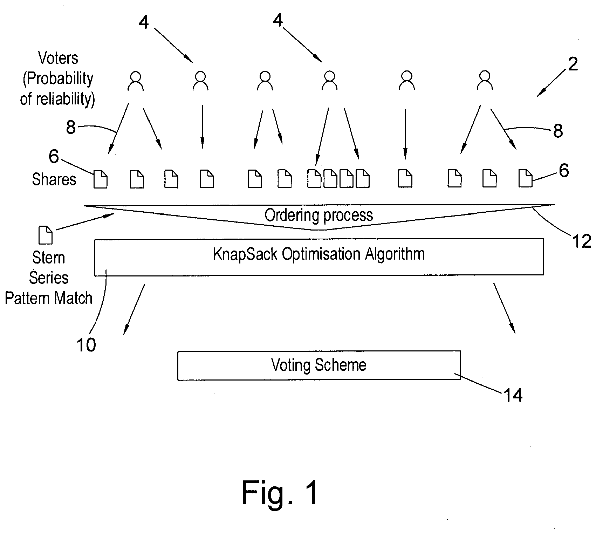

Referring to Figure 1, a computer-implemented voting process 2 embodying the present invention for a plurality of participants 4 is disclosed. Each participant 4 holds a number of shares 6 of votes in the form of shares of a signed blockchain transaction, so that a threshold number of shares 6 is required in order to sign, and therefore execute 14, the blockchain transaction. The participants 4 can hold varying numbers of shares 6, and therefore the participants 4 can each hold a varying proportion of the total number of shares 6. A probability of reliability 8 can be assigned to each participant 4, wherein the probability of reliability 8 specifies the estimated probability that that participant 4 will vote as expected (or as required) on a given voting decision. The reliability value for the voter can be used as a measure of a cost of an item in a knapsack algorithm 10, described in greater detail below, for example so that cost = 1-reliability.
A threshold number of shares needs to be achieved in order to have a transaction signed. The proportions of shares can be assembled in ascending order. A safety margin for the number of required votes in the threshold can be included, i.e. combinations are calculated which provide higher than the threshold number of shares, in case the probability of reliability 8 is estimated too low. A collection of computational 'bins' is then constructed, sized corresponding to rational numbers ordered according to the Stern-Brocot tree, described in greater detail below. The Stern-Brocot tree can be constructed by dividing neighbouring terms of the Stem series to generate rational numbers. Alternatively the Stern-Brocot tree can be computed by following a matrix multiplication procedure detailed below. The tree to infinite depth lists a complete set of the rational numbers, as in this construction each rational number occurs only once. Clearly this set is an infinite set. In implementation the depth of the Stern-Brocot tree can be calibrated to tune the granularity of the computational bins. As the number of bins required grows, the computational expense of the sorting procedure increases.
Only the rational numbers whose value is between zero and one are considered, and these values are ordered by value 12 as the upper and lower bound values for the computational bins. These bins will hold the proportion of total votes that a voter has cast in favour of a 'motion' in question, for example a proposal to execute a blockchain transaction.
The share proportions multiplied by their reliability (as defined above) are compared to the ordering of the rational numbers less than unity in value and the share proportions placed in the rational number bin that is closest (but larger) in value. This provides an ordering, or a sorting, of the proportions of the shares 6. There will inevitably be a residual, as the share proportions will not exactly match the rational numbers in value, they will however, fall into the computational bins with upper and lower bounds defined as above.

To illustrate this an example is shown in the table below:

| Total Share proportion | Reliability | Contribution |
|---|---|---|
| 20% | 80% | 16% |
| 15% | 100% | 15% |
| 30% | 40% | 12% |

The contribution is the product of the total share proportion that a voter has and the reliability of those votes. The contribution can be viewed as the 'expected' number of votes a voter will contribute.

The optimum collection of voters can then be computed using a solution to a Knapsack problem (for example dynamic programming, or genetic algorithms), as described in greater detail in "Different Approaches to Solve the 0/1 Knapsack Problem", Maya Hristakeva Computer Science Department, Simpson College, Indianola, IA 50125.

A further advantage is that if the voting profile of the voters changes, or the reliability profile of the voters changes, the ordering and optimisation can be recomputed by rerunning the same computation. This enables use of this technique in highly dynamically changing circumstances. This also enables the technique to scale to scenarios where there are large numbers of voters.

Algorithmic approach to voting scheme at scale

Algorithm 1

Step 1: Collect information on voters and the number shares that they have.

Step 2: Calculate the proportion of total shares each voter has. Assess the degree of reliability that the voter has in voting habits. Assign a 'cost' to the voter for the issue being voted on, as described above. Create a series of computational 'bins' sized according to the rational numbers of value less than unity, as described by the Stern-Brocot tree.

Step 3: Compare proportions of shares with the values of the rationals less than unity as enumerated by the Stern-Brocot tree. This is an efficient way of sorting values in order of size based on rational fractions of value less than one. This procedure defines both the upper and lower bounds for computational bins. Place the expected proportions of the shares in the associated bin. Keep a track of each entry in each bin. Keep a track of how many entries there are in each bin. This prepares the information about the proportion of shares for the knapsack optimisation process.

Step 4: Run standard solutions to Knapsack algorithm, for example as described in "Different Approaches to Solve the 0/1 Knapsack Problem", Maya Hristakeva Computer Science Department, Simpson College, Indianola, IA 50125, with threshold values as constraints. An example of a 'dynamic programming' approach to Knapsack is detailed below.

Step 5: Confirm voting scheme

Detailed definition of Knapsack algorithm

An analogy can be drawn between filing a knapsack with valuable items and achieving a threshold vote with expected contributions from a number of voters, as described above. Solutions to the Knapsack problem are described in the Hristakeva reference cited above. One example is described in detail below.

The Knapsack problem specification is as follows:

Let $Xi$ denote how many copies of item i are to be placed into the knapsack. The objective function to maximise:

$$\text{Maximize}$$

$$\sum_{i-1}^{N} B_i X_i$$

Where $Xi$ is the quantity of item type X, and i is the index of the item packed into the knapsack, B is the benefit (so B=1 indicates good, B=0 indicates bad), $B_i$ is the expected benefit of voter i, as defined above, $X_i$ is the proportion

of the total shares that voter i has, subject to the constraints

$$\sum_{i=1}^{N} V_i \, X_i \leq V$$

where $V_i$ is the volume of the object index i, and V is the total number of votes, and

$0 \leq X_i \leq Q_i$, where Q is the maximum number of items of type i

If one or more of the $Qi$ is infinite, the KP is unbounded; otherwise, the KP is bounded, as described in more detail in Chen T.S. Huang G.S. Liu T.P. and Chung Y.F (2002), 'Digital Signature Scheme Resulted from Identification Protocol for Elliptic Curve Cryptosystem', Proceedings of IEEE TENCON'02. pp. 192-195.

Implementation of a solution to the Knapsack problem

A dynamic programming approach solution is described below.
Dynamic Programming solves problems whose solutions satisfy recurrence relations with overlapping sub-problems.
Dynamic Programming solves each of the smaller sub-problems only once and records the results in a table. This increases the computational efficiency of the overall solution.
The table is then used to obtain a solution to the original problem. The dynamic programming approach works bottom-up, for example as described in Hsu C.L and Wu T. C. (1998), Authenticated Encryption Scheme with (t, n) Shared Verification', IEEE Proceedings - Computers and Digital Techniques, Vol. 145, no. 2, pp. 117-120, but the technique can also be applied top-down.
To design a dynamic programming algorithm for the 0/1 Knapsack problem, it is first necessary to derive a recurrence relation that expresses a solution to an instance of the knapsack problem in terms of solutions to its smaller instances.
Consider an instance of the problem defined by the first *i* items, $1 \leq i \leq N$,, with:

$$weights \ w1, \dots, wN,$$

$$values \ v1, \dots, vN,$$

$$and \ knapsack \ capacity \ j, 1 \ \leq j \ \leq V.$$

Let *Table* [*i, j*] be the optimal solution of this instance (that is, the value of the most valuable subsets of the first *i* items that fit into the knapsack capacity of j).
All the subsets of the first *i* items that fit the knapsack of capacity *j* can be divided into two subsets that do not include the *i* th item and subsets that include the *i* th item.
This generates the recurrence relation:

$$If \quad j < w_i \ then$$

$$Table[i,j] \leftarrow Table[i-1,j] \qquad \text{Cannot fit the } i^{th} \text{ item}$$

$$Else$$

$$Table[i,j] \leftarrow maximum \ \{ \ Table[i-1,j] \qquad \text{Do not use the } i^{th} \text{ item}$$

$$AND$$

$$vi + Table[i-1, j - v_{i,}] \qquad \text{Use the } i^{th} \text{ item}$$

In this context the symbol ← denotes assignment of a value to a data structure.
The aim is to find *Table [N, Capacity]* the maximal value of a subset of the knapsack.
The two boundary conditions for the knapsack problem are:

- The knapsack has no value when there no items included in it (that is, i = 0).

$$Table \ [0,j] = 0 \ for \ j \ \geq 0$$

- The knapsack has no value when its capacity is zero (that is, $j$ = 0), because no items can be included in it.

$$Table \ [i,0] = 0 \ for \ i \geq 0$$

ALGORITHM

Dynamic Programming ($Weights$ $[1 \dots N]$, $Values[1 \dots N]$, $table$ $[0 \dots N, 0 \dots Capacity]$)

Input: Array Weights contains the weights of all items. Array Values contains the values of all items. Array Table is initialized with 0s; it is used to store the results from the dynamic programming algorithm.

Output: The last value of array *Table (Table [N, Capacity])* contains the optimal solution of the problem for the given Capacity

$$for\ i = 0\ to\ N\ do$$

$$for\ j = 0\ to\ Capacity$$

$$if < Weights[i]\quad then$$

$$Table[i,j] \leftarrow Table[i-1,j]$$

$$else$$

$$Table[i,j] \leftarrow maximum\ \{\ table[i-1,j]$$
$$AND$$

$$Values[i] + table[i-1,j-Weights[i[]]$$

$$return\ Table[N, Capacity]$$

In this algorithm instance we use two separate arrays are used for the weights and the values of the items, and one further array Items of type item, where item is a structure with two fields: weight and value.
To find which items are included in the optimal solution, the following algorithm is used:

$$n \leftarrow N \qquad c \leftarrow Capacity$$

Start at position *Table[n, c]*

While the remaining capacity is greater than 0 do

If $Table[n, c] = Table[n - 1, c]$ then

Item *n* has not been included in the optimal solution

Else

Item *n* has been included in the optimal solution

Process Item *n*

Move one row up to *n-1*

Move to column $c - weight(n)$

Definition of Stern-Brocot tree

```
                          1
                         ---
                          1
              1                       2
             ---                     ---
              2                       1


       1           2      3            3
      ---         ---    ---          ---
       3           3      2            1
```

It can be seen from the above schematic, which is derived from a Stem series, that the rational numbers can be arranged in the form of a tree. The relationship between the leaves in the tree is that they are all derived from the top element, namely (1/1).

By considering this value as a vector and multiplying this by either a left matrix L or a right matrix R, successive leaves on the tree can be generated. The matrices L and Rare defined as follows:

$$I = \begin{matrix} 1 & 0 \\ 0 & 1 \end{matrix}$$

$$L = \begin{matrix} 1 & 0 \\ 1 & 1 \end{matrix}$$

$$R = \begin{matrix} 1 & 1 \\ 0 & 1 \end{matrix}$$

And the structure that emerges is as follows:

I

IL                         IR

ILL          ILR          IRL          IRR

By recursively applying the matrices R and L, it can be seen that further branches of the tree can be generated. The terms at any given level of the tree can then be read from left to right, and an ordering of the rational numbers can be generated. Those numbers to the left of the centre line (aligned with the matrix I) have a value between zero and unity. Those to the right of the centre line have a value greater than unity.

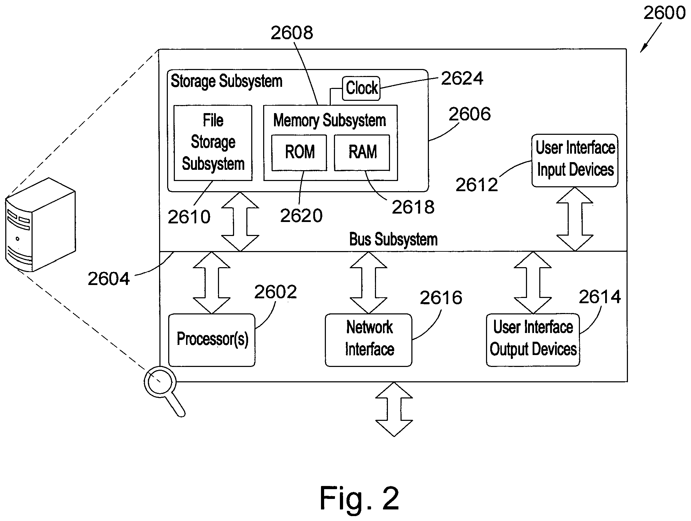

Turning now to Figure 2, there is provided an illustrative, simplified block diagram of a computing device 2600 that may be used to practice at least one embodiment of the present disclosure. In various embodiments, the computing device 2600 may be used to implement any of the systems illustrated and described above. For example, the computing device 2600 may be configured for use as a data server, a web server, a portable computing device, a personal computer, or any electronic computing device. As shown in Figure 2, the computing device 2600 may include one or more processors with one or more levels of cache memory and a memory controller (collectively labelled 2602) that can be configured to communicate with a storage subsystem 2606 that includes main memory 2608 and persistent storage 2610. The main memory 2608 can include dynamic random-access memory (DRAM) 2618 and read-only memory (ROM) 2620 as shown. The storage subsystem 2606 and the cache memory 2602 and may be used for storage of information, such as details associated with transactions and blocks as described in the present disclosure. The processor(s) 2602 may be utilized to provide the steps or functionality of any embodiment as described in the present disclosure.

The processor(s) 2602 can also communicate with one or more user interface input devices 2612, one or more user interface output devices 2614, and a network interface subsystem 2616.

A bus subsystem 2604 may provide a mechanism for enabling the various components and subsystems of computing device 2600 to communicate with each other as intended. Although the bus subsystem 2604 is shown schematically as a single bus, alternative embodiments of the bus subsystem may utilize multiple busses.

The network interface subsystem 2616 may provide an interface to other computing devices and networks. The network interface subsystem 2616 may serve as an interface for receiving data from, and transmitting data to, other systems from the computing device 2600. For example, the network interface subsystem 2616 may enable a data technician to connect the device to a network such that the data technician may be able to transmit data to the device and receive data from the device while in a remote location, such as a data centre.

The user interface input devices 2612 may include one or more user input devices such as a keyboard; pointing devices such as an integrated mouse, trackball, touchpad, or graphics tablet; a scanner; a barcode scanner; a touch screen incorporated into the display; audio input devices such as voice recognition systems, microphones; and other types of input devices. In general, use of the term "input device" is intended to include all possible types of devices and mechanisms for inputting information to the computing device 2600.

The one or more user interface output devices 2614 may include a display subsystem, a printer, or non-visual displays such as audio output devices, etc. The display subsystem may be a cathode ray tube (CRT), a flat-panel device such as a liquid crystal display (LCD), light emitting diode (LED) display, or a projection or other display device. In general, use of the term "output device" is intended to include all possible types of devices and mechanisms for outputting information from the computing device 2600. The one or more user interface output devices 2614 may be used, for example, to present user interfaces to facilitate user interaction with applications performing processes described and variations therein, when such interaction may be appropriate.

The storage subsystem 2606 may provide a computer-readable storage medium for storing the basic programming and data constructs that may provide the functionality of at least one embodiment of the present disclosure. The applications (programs, code modules, instructions), when executed by one or more processors, may provide the functionality of one or more embodiments of the present disclosure, and may be stored in the storage subsystem 2606. These application modules or instructions may be executed by the one or more processors 2602. The storage subsystem 2606 may additionally provide a repository for storing data used in accordance with the present disclosure. For example, the main memory 2608 and cache memory 2602 can provide volatile storage for program and data. The persistent storage 2610 can provide persistent (non-volatile) storage for program and data and may include flash memory, one or more solid state drives, one or more magnetic hard disk drives, one or more floppy disk drives with associated removable media, one or more optical drives (e.g. CD-ROM or DVD or Blue-Ray) drive with associated removable media, and other like storage media. Such program and data can include programs for carrying out the steps of one or more embodiments as described in the present disclosure as well as data associated with transactions and blocks as described in the present disclosure.

The computing device 2600 may be of various types, including a portable computer device, tablet computer, a workstation, or any other device described below. Additionally, the computing device 2600 may include another device that may be connected to the computing device 2600 through one or more ports (e.g., USB, a headphone jack, Lightning connector, etc.). The device that may be connected to the computing device 2600 may include a plurality of ports configured to accept fibre-optic connectors. Accordingly, this device may be configured to convert optical signals to electrical signals that may be transmitted through the port connecting the device to the computing device 2600 for processing. Due to the ever-changing nature of computers and networks, the description of the computing device 2600 depicted in FIG. 2 is intended only as a specific example for purposes of illustrating the preferred embodiment of the device. Many other configurations having more or fewer components than the system depicted in FIG.2 are possible.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

References

1. Chen T.S. Huang G.S. Liu T.P. and Chung Y.F (2002), 'Digital Signature Scheme Resulted from Identification Protocol for Elliptic Curve Cryptosystem', Proceedings of IEEE TENCON'02. pp. 192-195

2. Hsu C.L and Wu T. C. (1998), Authenticated Encryption Scheme with (t, n) Shared Verification', IEEE Proceedings - Computers and Digital Techniques, Vol. 145, no. 2, pp. 117-120.

3. Graham, R. L.; Knuth, D. E.; and Patashnik, O. Concrete Mathematics: A Foundation for Computer Science, 2nd ed. Reading, MA: Addison-Wesley, pp. 116-117, 1994.

4. Koblitz N. (1987), 'Elliptic Curve Cryptosystems', Mathematics of Computation, pp 203-209.

4a. Padma Bh et. al. / (IJCSE) International Journal on Computer Science and Engineering Vol. 02, No. 05, 2010, 1904-1907 Encoding And Decoding of a Message in the Implementation of Elliptic Curve Cryptography using Koblitz's Method

5. Nyberg K. and Rueppel R.A. (1993), 'A New Signature Scheme Based on DSA giving message Recovery', ACM Computer and Communications Security, Vol.1,pp.58-61.

6. Rajaram Ramasamy R, Prabakar M.A, Devi M.I, and Suguna M(2009), 'Knapsack Based ECC Encryption and Decryption', International Journal of Network Security, Vol.9, no.3, pp. 218-226.

7. Rajaram Ramasamy R. and Amutha Prabakar M. (2011), 'Digital Signature Scheme with message Recovery Using Knapsack -based ECC', International Journal of Network Security, Vol.12, no.1,pp.15,20.
8. Reznick (2008), 'Regularity Properties of the Stern Enumeration of the Rationals', Journal of Integer Sequence.
9. Stem, M. A. "Über eine zahlentheoretische Funktion." J. reine angew. Math. 55, 193-220, 1858.
10. Different Approaches to Solve the 0/1 Knapsack Problem Maya Hristakeva Computer Science Department Simpson College Indianola, IA 50125 hri stake@ simpson. edu

**Claims**

1. A computer implemented voting process (2) comprising:-

   distributing a plurality of shares (6) of a first common secret among a plurality of participants (4), wherein said first common secret implements an automated voting process by the participants and is accessible to a first threshold number of said shares and is inaccessible to less than said first threshold number of shares; and determining, based on different numbers of said shares of said first common secret held by a plurality of said participants, at least one combination of said shares held by a plurality of said participants (4), to provide said first threshold number of shares;
   **characterized in that** the step of determining at least one said combination comprises applying a knapsack algorithm (10) to data including information representing respective numbers of shares held by a plurality of said participants (4);
   where the data further includes information representing estimated voting behaviour of a plurality of said participants (4); and
   wherein the information representing estimated voting behaviour includes a coefficient by which the information representing respective numbers of shares held by a plurality of said participants (4) is multiplied.

2. A process according to any one of the preceding claims, wherein the knapsack algorithm (10) determines at least one first said combination for shares held by a first plurality of said participants (4) on the basis of at least one second said combination for shares held by a second plurality of said participants, wherein said second plurality is different from said first plurality.

3. A process according to any one of the preceding claims, wherein numbers of shares held by a plurality of participants are estimated by comparing said data to a plurality of predetermined values.

4. A process according to claim 3, wherein the predetermined values are based on at least one Stem series.

5. A process according to claim 3 or 4, wherein a plurality of said predetermined values are determined on the basis of other said predetermined values.

6. A process according to any one of the preceding claims, wherein the first common secret is a digital signature.

7. A process according to claim 6, wherein each said share is a partial signature, signed by a respective share of a private key and a respective share of an ephemeral key, and the method further comprises distributing a plurality of shares (6) of said private key among said plurality of participants (4), wherein said first private key is accessible to a second threshold number of shares and is inaccessible to less than said second threshold number of shares, and distributing a plurality of shares of said ephemeral key among said plurality of participants, wherein said ephemeral key is accessible to a third threshold number of shares and is inaccessible to less than said third threshold number of shares.

8. A process according to claim 6 or 7, wherein the digital signature is applied to a blockchain transaction.

9. A system, comprising:

   a processor (2602); and
   memory (2608) including executable instructions that, as a result of execution by the processor, causes the system to perform any embodiment of the computer-implemented process as defined in any one of claims 1 to 8.

10. A non-transitory computer-readable storage medium having stored thereon executable instructions that, as a result of being executed by a processor of a computer system, cause the computer system to at least perform an embodiment of the computer-implemented process as defined in any one of claims 1 to 8.

**Patentansprüche**

1. Ein computerimplementierter Wahlprozess (2), der Folgendes beinhaltet:

   Verteilen einer Vielzahl von Anteilen (6) eines ersten gemeinsamen Geheimnisses unter einer Vielzahl von Teilnehmern (4), wobei das erste gemeinsame Geheimnis einen automatisierten Wahlprozess durch die Teilnehmer implementiert und auf das durch eine erste Schwellenwertzahl der Anteile zugegriffen werden kann und auf das durch weniger als die erste Schwellenwertzahl der Anteile nicht zugegriffen werden kann; und Bestimmen, basierend auf unterschiedlichen Anzahlen der Anteile des ersten gemeinsamen Geheimnisses, die durch eine Vielzahl dieser Teilnehmer gehalten werden, mindestens einer Kombination der Anteile, die durch eine Vielzahl der Teilnehmer (4) gehalten werden, um die erste Schwellenwertzahl von Anteilen bereitzustellen;
   **dadurch gekennzeichnet, dass** der Schritt des Bestimmens mindestens einer der Kombination das Anwenden eines Knapsack-Algorithmus (10) auf Daten beinhaltet, Informationen umfassen, die jeweilige Anzahlen von Anteilen darstellen, die durch eine Vielzahl der Teilnehmer (4) gehalten werden;
   wobei die Daten ferner Informationen umfassen, die ein geschätztes Wahlverhalten einer Vielzahl der Teilnehmer (4) darstellen; und
   wobei die Informationen, die das geschätzte Wahlverhalten darstellen, einen Koeffizienten umfassen, mit dem die Informationen, die die jeweiligen Anzahlen von Anteilen, die durch eine Vielzahl der Teilnehmer (4) gehalten werden, herstellen, multipliziert werden.

2. Prozess gemäß einem der vorhergehenden Ansprüche, wobei der Knapsack-Algorithmus (10) mindestens eine erste derartige Kombination für Anteile, die durch eine erste Vielzahl der Teilnehmer (4) auf der Basis gehalten werden, dass mindestens eine zweite derartige Kombination von Anteilen, die durch eine zweite Vielzahl der Teilnehmer gehalten wird, bestimmt, wobei sich die zweite Vielzahl von der ersten Vielzahl unterscheidet.

3. Prozess gemäß einem der vorhergehenden Ansprüche, wobei die Anzahlen von Anteilen, die durch eine Vielzahl von Teilnehmern gehalten werden, durch das Vergleichen der Daten mit einer Vielzahl von vorbestimmten Werten geschätzt werden.

4. Prozess gemäß Anspruch 3, wobei die vorbestimmten Werte auf mindestens einer Stern-Serie basieren.

5. Prozess gemäß Anspruch 3 oder 4, wobei eine Vielzahl der vorbestimmten Werte auf der Basis anderer der vorbestimmten Werte bestimmt werden.

6. Prozess gemäß einem der vorhergehenden Ansprüche, wobei das erste gemeinsame Geheimnis eine digitale Signatur ist.

7. Prozess gemäß Anspruch 6, wobei jeder Anteil eine partielle Signatur ist, die durch einen jeweiligen Anteil eines privaten Schlüssels und einen jeweilgen Anteil eines ephemeren Schlüssels signiert ist, und das Verfahren ferner das Verteilen einer Vielzahl von Anteilen (6) des privaten Schlüssels unter der Vielzahl von Teilnehmern (4) beinhaltet, wobei auf den ersten privaten Schlüssel durch eine zweite Schwellenwerttahl von Anteilen zugegriffen werden kann und auf diesen durch weniger als die zweite Schwellenwertzahl von Anteilen nicht zugegriffen werden kann, und das Verteilen einer Vielzahl von Anteilen des ephemeren Schlüssels unter der Vielzahl von Teilnehmern, wobei auf den ephemeren Schlüssel zu einer dritten Schwellwertzahl von Anteilen zugegriffen werden kann und auf diesen durch weniger als die dritte Schwellwertzahl von Anteilen nicht zugegriffen werden kann.

8. Prozess gemäß Anspruch 6 oder 7, wobei die digitale Signatur auf eine Blockchain-Transaktion angewendet wird.

9. Ein System, das Folgendes beinhaltet:

   einen Prozessor (2602); und
   Speicher (2608), der ausführbare Anweisungen umfasst, die als Ergebnis der Ausführung durch den Prozessor bewirken, dass das System eine beliebige Ausführungsform des computerimplementierten Prozesses gemäß einem der Ansprüche 1 bis 8 durchführt.

10. Ein nichttransitorisches computerlesbares Speichermedium, auf dem ausführbare Anweisungen gespeichert sind, die, als ein Ergebnis der Ausführung durch einen Prozessor eines Computersystems bewirken, dass das Computersystem mindestens eine Ausführungsform des computerimplementierten Prozesses gemäß einem der Ansprüche 1 bis 8 durchführt.

**Revendications**

1. Un procédé de vote mis en oeuvre par ordinateur (2) comprenant :

la distribution d'une pluralité de parts (6) d'un premier secret commun parmi une pluralité de participants (4), ledit premier secret commun mettant en oeuvre un procédé de vote automatisé par les participants et étant accessible à un premier nombre seuil de ces dites parts et étant inaccessible à un nombre inférieur à ce dit premier nombre seuil de parts ; et
la détermination, sur la base de différents nombres de ces dites parts dudit premier secret commun détenues par une pluralité desdits participants, d'au moins une combinaison de ces dites parts détenues par une pluralité desdits participants (4), afin de fournir ce dit premier nombre seuil de parts ;
**caractérisé en ce que** l'étape consistant à déterminer au moins une dite combinaison comprend l'application d'un algorithme d'empilement (10) à des données incluant des informations représentant des nombres respectifs de parts détenues par une pluralité desdits participants (4) ;
où les données incluent en outre des informations représentant un comportement de vote estimé d'une pluralité desdits participants (4) ; et
dans lequel les informations représentant un comportement de vote estimé incluent un coefficient par lequel les informations représentant des nombres respectifs de parts détenues par une pluralité desdits participants (4) sont multipliées.

2. Un procédé selon n'importe laquelle des revendications précédentes, dans lequel l'algorithme d'empilement (10) détermine au moins une première dite combinaison pour des parts détenues par une première pluralité desdits participants (4) sur la base d'au moins une deuxième dite combinaison pour des parts détenues par une deuxième pluralité desdits participants, ladite deuxième pluralité étant différente de ladite première pluralité.

3. Un procédé selon n'importe laquelle des revendications précédentes, dans lequel des nombres de parts détenues par une pluralité de participants sont estimés par comparaison desdites données avec une pluralité de valeurs prédéterminées.

4. Un procédé selon la revendication 3, dans lequel les valeurs prédéterminées sont basées sur au moins une série de Stern.

5. Un procédé selon la revendication 3 ou la revendication 4, dans lequel une pluralité de ces dites valeurs prédéterminées sont déterminées sur la base d'autres dites valeurs prédéterminées.

6. Un procédé selon n'importe laquelle des revendications précédentes, dans lequel le premier secret commun est une signature numérique.

7. Un procédé selon la revendication 6, dans lequel chaque dite part est une signature partielle, signée par une part respective d'une clé privée et une part respective d'une clé éphémère, et la méthode comprend en outre la distribution d'une pluralité de parts (6) de ladite clé privée parmi ladite pluralité de participants (4), ladite première clé privée étant accessible à un deuxième nombre seuil de parts et étant inaccessible à un nombre inférieur à ce dit deuxième nombre seuil de parts, et la distribution d'une pluralité de parts de ladite clé éphémère parmi ladite pluralité de participants, ladite clé éphémère étant accessible à un troisième nombre seuil de parts et étant inaccessible à un nombre inférieur à ce dit troisième nombre seuil de parts.

8. Un procédé selon la revendication 6 ou la revendication 7, dans lequel la signature numérique est appliquée à une transaction par chaîne de blocs.

9. Un système, comprenant :

un processeur (2602) ; et

une mémoire (2608) incluant des instructions exécutables qui, en conséquence de leur exécution par le processeur, amènent le système à effectuer n'importe quel mode de réalisation du procédé mis en oeuvre par ordinateur tel que défini dans n'importe laquelle des revendications 1 à 8.

10. Un support de stockage non transitoire lisible par ordinateur sur lequel sont stockées des instructions exécutables qui, en conséquence du fait d'être exécutées par un processeur d'un système informatique, amènent le système informatique au moins à effectuer un mode de réalisation du procédé mis en oeuvre par ordinateur tel que défini dans n'importe laquelle des revendications 1 à 8.

**Fig. 1**

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017145016 A

### Non-patent literature cited in the description

- **ZHAO ZHIGHAO et al.** How to Vote Privately Using Bitcoin. *IMAGE ANALYSIS AND RECOGNITION : 11TH INTERNATIONAL CONFERENCE, ICIAR 2014, VILAMOURA, PORTUGAL, OCTOBER 22-24, 2014, PROCEEDINGS, PART I; IN: LECTURE NOTES IN COMPUTER SCIENCE,* 05 March 2016, vol. 8814, ISSN 1611-3349
- A robust threshold elliptic curve digital signature providing a new verifiable secret sharing scheme. **IBRAHIM M H et al.** MIDWEST SYMPOSIUM ON CIRCUITS AND SYSTEMS. CAIRO, EGYPT. IEEE, 27 December 2003, vol. 1, 276-280
- **CHIEN-HUA TSAI et al.** Multi-document threshold signcryption scheme. *Security and Communication Networks,* 10 September 2015, vol. 8 (13), 2244-2256
- **P.V. LAKSHMI et al.** A secure approach to election scheme based on Naccache Stem Knapsack Cryptosystem. *International Journal of Computer Applications,* 07 July 2010, vol. 4 (7), 16-19
- **CHEN T.S ; HUANG G.S ; LIU T.P. ; CHUNG Y.F.** 'Digital Signature Scheme Resulted from Identification Protocol for Elliptic Curve Cryptosystem. *Proceedings of IEEE TENCON'02.,* 2002, 192-195
- **HSU C.L ; WU T. C.** Authenticated Encryption Scheme with (t, n) Shared Verification. *IEEE Proceedings - Computers and Digital Techniques,* 1998, vol. 145 (2), 117-120
- **CHEN T.S. ; HUANG G.S ; LIU T.P. ; CHUNG Y.F.** Digital Signature Scheme Resulted from Identification Protocol for Elliptic Curve Cryptosystem. *Proceedings of IEEE TENCON'02.,* 2002, 192-195
- **HSU C.L ; WU T. C.** Authenticated Encryption Scheme with (t, n) Shared Verification. *IEEE Proceedings - Computers and Digital Techniques,* 1998, vol. 145 (2), 117-120
- **GRAHAM, R. L. ; KNUTH, D. E. ; PATASHNIK, O.** Concrete Mathematics: A Foundation for Computer Science. Addison-Wesley, 1994, 116-117
- **KOBLITZ N.** Elliptic Curve Cryptosystems. *Mathematics of Computation,* 1987, 203-209
- **PADMA BH.** Encoding And Decoding of a Message in the Implementation of Elliptic Curve Cryptography using Koblitz's Method. *IJCSE) International Journal on Computer Science and Engineering,* 2010, vol. 02 (05), 1904-1907
- **NYBERG K. ; RUEPPEL R.A.** A New Signature Scheme Based on DSA giving message Recovery. *ACM Computer and Communications Security,* 1993, vol. 1, 58-61
- **RAJARAM RAMASAMY R ; PRABAKAR M.A ; DEVI M.I ; SUGUNA M.** Knapsack Based ECC Encryption and Decryption. *International Journal of Network Security,* 2009, vol. 9 (3), 218-226
- **RAJARAM RAMASAMY R ; AMUTHA PRABAKAR M.** Digital Signature Scheme with message Recovery Using Knapsack -based ECC. *International Journal of Network Security,* 2011, vol. 12 (1), 15, , 20
- **REZNICK.** Regularity Properties of the Stern Enumeration of the Rationals. *Journal of Integer Sequence,* 2008
- **STEM, M. A.** Über eine zahlentheoretische Funktion. *J. reine angew. Math.,* vol. 55, 193-220